# EUROPEAN PATENT APPLICATION

(11) **EP 4 718 566 A1**
(43) Date of publication of application: **01.04.2026**
(21) Application number: 25823108.3
(22) Date of filing: 23.07.2025
(51) Int. Cl.: H01M 10/0567, H01M 10/0525, H01M 10/054

(54) **ELECTROLYTE ADDITIVE, ELECTROLYTE AND BATTERY**

(30) Priority: 23.07.2024 CN 202410990690
(71) Applicant: Guangzhou Tinci Materials Technology Co., Ltd., Guangzhou, Guangdong 510760 (CN)
(72) Inventor: LI, Jianji, Guangzhou, Guangdong 510760 (CN); SUN, Wenpo, Guangzhou, Guangdong 510760 (CN); XIE, Tian, Guangzhou, Guangdong 510760 (CN); ZHOU, Li, Guangzhou, Guangdong 510760 (CN)
(74) Representative: Studio Torta S.p.A.
(86) International application number: PCT/CN2025/110146
(87) International publication number: WO 2026/021490

(57) **Abstract**

Provided are an electrolyte additive, an electrolyte, and a battery. The electrolyte additive includes a first additive and a second additive. The first additive includes a compound containing element silicon and an unsaturated hydrocarbyl group; and the second additive includes a compound represented by Formula 1. 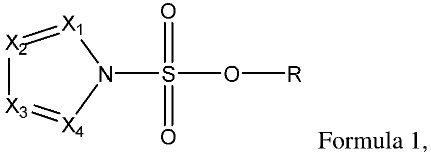 where: X₁, X₂, X₃, and X₄ are each independently selected from N or CH; R is selected from 5- to 6-membered aryl, 5- to 6-membered aryl substituted with R₀, 5- to 6-membered heteroaryl, 5- to 6-membered heteroaryl substituted with R₀, C₁₋₈ alkyl, C₁₋₈ alkyl substituted with R₀, C₂₋₈ alkenyl, C₂₋₈ alkenyl substituted with R₀, C₀₋₈ alkylsilyl, or C₀₋₈ alkylsilyl substituted with R₀; and R₀ is selected from C₁₋₆ alkyl, C₁₋₆ alkoxy, or halogen.

## Description

### CROSS-REFERENCE TO RELATED APPLICATIONS

This application claims priority and benefits of the patent application No. 202410990690.3, filed with the China National Intellectual Property Administration on July 23, 2024, which is incorporated herein by reference in its entirety.

### FIELD

The present disclosure relates to the field of batteries, and specifically, to an electrolyte additive, an electrolyte, and a battery.

### BACKGROUND

In recent years, with the rapid development and widespread application of various portable electronic devices, new energy electric vehicles, and energy storage systems, the demand for secondary batteries with high energy density, long cycle life, safe use, and good rate performances has become increasingly urgent.

However, positive electrode materials of the secondary batteries (such as secondary batteries, sodium-ion batteries) may have problems such as insufficient stability. The high-temperature performance of the secondary batteries is particularly important. During operation, the battery suffers from issues including poor storage performance, poor cycle performance, and gas production at high temperatures. One of the important reasons is that lithium hexafluorophosphate salt currently used commercially in large quantities has poor thermal stability, and is easy to decompose and react with trace impurities in the electrolyte under high-temperature conditions, which in turn causes a rapid increase in the acidity of the electrolyte, This deteriorates the quality of the electrolyte and causing serious gas production problems in the battery under high-temperature conditions, thereby deteriorating the cycle performance, storage performance, and safety performance of the battery under high-temperature conditions.

In conventional secondary batteries, various additives are usually added to the electrolyte, which can form an organic passivation film on the surface of the active material, to improve the battery's cycle performance, high-temperature storage performance, and so on. However, the passivation film formed by conventional additives on the surface of the active material has a large internal resistance, and it is difficult to inhibit the continuous decomposition of the electrolyte on the negative electrode active material during the cycle of the battery. As a result, the thickness of the passivation film and the internal resistance of the secondary battery during the cycle continuously increase. At the same time, conventional additives are difficult to solve the stability problem of the electrolyte at high temperatures, which seriously affects the performances of the battery in terms of cycle and storage at high temperatures, and also affects the safety performance of the battery.

Based on the above deficiencies, it is necessary to develop an electrolyte that significantly improves the cycle performance and high-temperature storage performance of the secondary battery at high temperature.

### SUMMARY

The present disclosure aims to solve, at least to a certain extent, one of the technical problems in the related art. To this end, one purpose of the present disclosure is to provide an electrolyte additive, an electrolyte, and a battery. By adding the electrolyte additive to a secondary battery, cycle performance and storage performance of the secondary battery at high temperature can be improved.

In a first aspect, the present disclosure provides an electrolyte additive. The electrolyte additive includes a first additive and a second additive. The first additive includes a compound containing element silicon and an unsaturated hydrocarbyl group, and the second additive includes a compound represented by Formula 1: 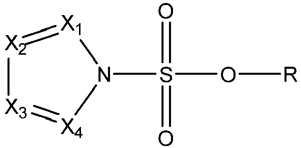 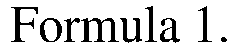 X₁, X₂, X₃, and X₄ are each independently selected from N or CH; R is selected from 5- to 6-membered aryl, 5- to 6-membered aryl substituted with R₀, 5- to 6-membered heteroaryl, 5- to 6-membered heteroaryl substituted with R₀, C₁₋₈ alkyl, C₁₋₈ alkyl substituted with R₀, C₂₋₈ alkenyl, C₂₋₈ alkenyl substituted with R₀, C₀₋₈ alkylsilyl, or C₀₋₈ alkylsilyl substituted with R₀; and R₀ is selected from C₁₋₆ alkyl, C₁₋₆ alkoxy, or halogen.

The synergistic use of the first additive and the second additive can form a protective layer with a three-dimensional network on the negative electrode of the battery, respectively providing a cross-linked protective layer to form an SEI film with high conductivity and high thermal stability. In this way, the formation of secondary particles aggregated at the battery interface and the thickness of the SEI film are effectively reduced, and the high-temperature storage performance of the battery is improved.

In some embodiments, at least one of X₁, X₂, X₃, or X₄ is N, and the rest are CH.

In some embodiments, a mass ratio of the first additive to the second additive is (1 to 50): (1 to 50). Therefore, by making the mass ratio of the first additive to the second additive within the above range, they can better function together to form an excellent SEI film at the negative electrode of the battery, reduce the impedance of the negative electrode during the recycle of the battery, and improve the high-temperature cycle performance and high-temperature storage performance of the battery.

In some embodiments, the first additive includes at least one of a compound represented by Formula 2 or a compound represented by Formula 3, 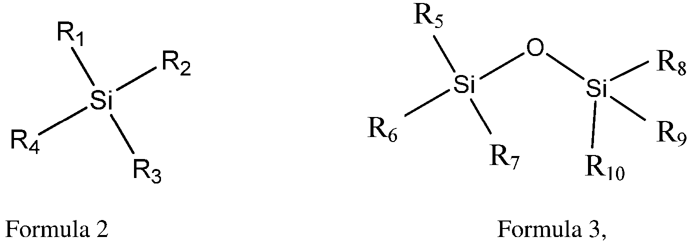 R₁, R₂, R₃, R₄, R₅, R₆, R₇, R₈, R₉, and R₁₀ are each independently selected from one of H, C₁-C₅ alkyl, C₂-C₅ alkenyl, C₂-C₅ alkynyl, C₂-C₅ alkoxy, or C₂-C₅ alkenyloxy; and at least one of R₁, R₂, R₃, R₄, R₅, R₆, R₇, R₈, R₉, or R₁₀ is an unsaturated hydrocarbyl group.

In some embodiments, the first additive includes at least one of tetravinylsilane, tetramethyldivinyldisiloxane or vinyltrimethoxysilane, allyloxytrimethylsilane. As a result, the first additive can generate a stable SEI film on the negative electrode surface of the battery, and function together with the second additive to improve the high-temperature cycle performance and high-temperature storage performance of the battery.

In some embodiments, the second additive includes at least one of the following compounds:

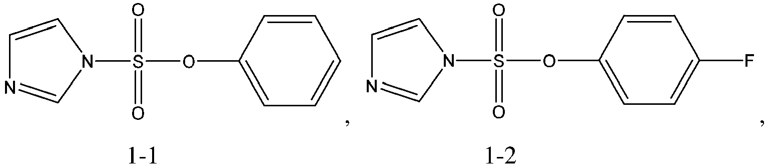

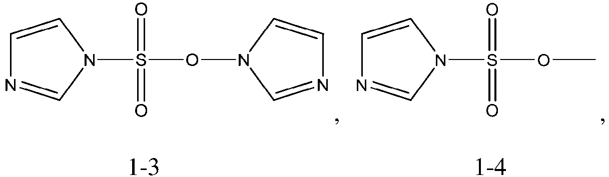

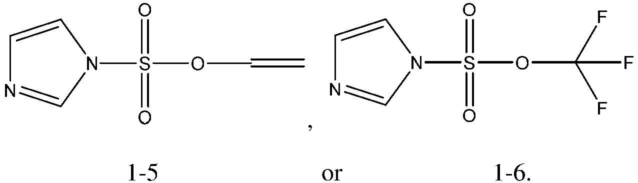

As a result, the second additive can form a SEI film with high lithium-ion conductivity on the surface of the negative electrode, and function together with the first additive to improve the high-temperature cycle performance and high-temperature storage performance of the battery.

In some embodiments, the electrolyte additive further includes: a third additive, and the third additive includes fluoroethylene carbonate. Therefore, the addition of the third additive can enhance the antioxidant capacity of the electrolyte and reduce the probability of decomposition of the electrolyte at the active site of the negative electrode plate.

In some embodiments, a mass ratio of the first additive, the second additive, and the third additive is (1 to 50): (1 to 50): (2 to 50). Therefore, the first additive, the second additive, and the third additive can fully synergistically function, not only forming an SEI with high conductivity and high thermal stability, but also improving the antioxidant performance of the electrolyte. Thus, it can improve the cycle performance and storage performance of the secondary battery at high temperature while ensuring the quality of the electrolyte at high temperature.

In a second aspect, the present disclosure provides an electrolyte, and the electrolyte includes the electrolyte additive according to the first aspect. Therefore, by adding this electrolyte to the secondary battery, an SEI film with a cross-linked protective network can be formed, the high-temperature cycle performance and high-temperature storage performance of the battery can be improved, the expansion and gas production of the secondary battery in a high-temperature environment can be reduced, and the problem of increasing internal resistance during the cycle can be solved.

In some embodiments, based on a total mass of the electrolyte, a mass proportion of the first additive ranges from 0.1% to 5%, and optionally from 0.1% to 3%. Therefore, by controlling the mass proportion of the first additive within the above range, a stable SEI film can be generated on the surface of the negative electrode. At the same time, the first additive can combine with the sulfone functional group of the second additive to form an SEI film with a cross-linked protection network, thereby improving the high-temperature cycle performance and high-temperature storage performance of the battery.

In some embodiments, based on the total mass of the electrolyte, a mass proportion of the second additive ranges from 0.1% to 5%, and optionally from 0.1% to 3%. Therefore, by controlling the mass proportion of the second additive within the above range, an SEI film with high conductivity can be generated on the surface of the negative electrode. At the same time, the further thickening of the SEI film formed by the first additive can be inhibited, the phenomenon of increasing internal resistance of the battery can be mitigated, and the high-temperature cycle performance and high-temperature storage performance of the battery can be improved.

In some embodiments, based on the total mass of the electrolyte, a mass proportion of the third additive ranges from 0.2% to 5%, and optionally from 0.5% to 2%. Therefore, by controlling the mass proportion of the third additive within the above range, the antioxidant capacity of the electrolyte can be enhanced, and the high-temperature cycle performance of the battery can be improved.

In a third aspect, the present disclosure provides a battery, and the battery includes the electrolyte according to the second aspect. Therefore, the battery has excellent high-temperature cycle performance and high-temperature storage performance.

In some embodiments, the positive electrode active material includes at least one of LiCoO₂, LiMn₂O₄, LiMnO₂, Li₂MnO₄, LiFePO₄, Li₁₊ₐMn₁₋ₓMₓO₂, LiCo₁₋ₓMₓO₂, LiFe₁₋ₓMₓPO₄, or Li₂Mn₁₋ₓO₄, where M includes at least one of Ni, Co, Mn, Al, Cr, Mg, Zr, Mo, V, Ti, B, or F, where 0≤a<0.2, and 0≤x<1.

In some embodiments, the battery includes a positive electrode active material, and the positive electrode active material includes at least one of Na_{X1}M1O₂, Naₓ₂M2[M3(CN)₆], NaFePO₄, Na₃V₂(PO₄)₃, Na₂M4P₂O₇, Na₂Fe₂(SO₄)₃, or Na₂M4(SO₄)₂·2H₂O, where 0<x1≤1, M1 includes at least one of Ni, Co, Mn, Fe, or Cu, 0<x2<6, M2 includes at least one of Ni, Fe, or Mn, M3 includes at least one of Fe or Mn, and M4 includes at least one of Fe, Co, Mn, or Cu.

Additional aspects and advantages of the present disclosure will be provided in part in the following description, or will become apparent in part from the following description, or can be learned from practicing of the present disclosure.

### DETAILED DESCRIPTION

The embodiments of the present disclosure are described in detail below, which are intended to explain the present disclosure and should not be construed as limiting the present disclosure.

Reference to "embodiment" herein means that a particular feature, structure, or characteristic described in connection with the embodiment can be included in at least one embodiment of the present disclosure. The appearances of this phrase in various places in the specification are not necessarily all referring to the same embodiment, nor are separate or alternative embodiments mutually exclusive of other embodiments. It is understood explicitly and implicitly by those skilled in the art that the embodiments described herein may be combined with other embodiments.

For the sake of brevity, only some numerical ranges are specifically disclosed herein. However, any lower limit can be combined with any upper limit to form an unspecified range; and any lower limit can be combined with other lower limits to form an unspecified range, and likewise any upper limit can be combined with any other upper limit to form an unspecified range. In addition, each individually disclosed point or single numerical value may itself serve as a lower limit or upper limit combined with any other point or single numerical value or with other lower limits or upper limits to form a range that is not explicitly recited.

Unless otherwise defined, all technical and scientific terms used herein have the same meaning as commonly understood by those skilled in the art to which the present disclosure belongs. The terms used herein are only for the purpose of describing specific embodiments and are not intended to limit the present disclosure. The terms "comprising/including" and "having" and any variations thereof in the specification and claims of the present disclosure and the above-mentioned figure descriptions are intended to cover non-exclusive inclusions.

As used herein, the terms "comprising" or "including" are open-ended expressions, that is, including the contents specified in the present disclosure, but not excluding other contents.

It should be noted that the terms "first" and "second" are merely used for descriptive purposes and should not be understood as indicating or implying relative importance or implicitly indicating the number of the indicated technical features. Therefore, features defined as "first" or "second" may explicitly or implicitly include one or more of the features. Further, in the description of the present disclosure, unless otherwise specified, "plurality" means two or more.

### Terms

The term "alkyl" refers to a saturated hydrocarbyl group containing primary (normal) carbon atoms, or secondary carbon atoms, or tertiary carbon atoms, or quaternary carbon atoms, or a combination thereof. Phrases containing this term, for example, "C₁₋₈ alkyl" refers to alkyl containing 1 to 8 carbon atoms. Suitable examples include, but are not limited to, methyl (Me, -CH₃), ethyl (Et, -CH₂CH₃), 1-propyl (n-Pr, n-propyl, -CH₂CH₂CH₃), 2-propyl (i-Pr, i-propyl, - CH(CH₃)₂), 1-butyl (n-Bu, n-butyl, -CH₂CH₂CH₂CH₃), 2-methyl-1-propyl (i-Bu, i-butyl, - CH₂CH(CH₃)₂), 2-butyl (s-Bu, s-butyl, -CH(CH₃)CH₂CH₃), 2-methyl-2-propyl (t-Bu, t-butyl, - C(CH₃)₃), 1-pentyl (n-pentyl, -CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), 1-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃), and octyl (-(CH₂)₇CH₃).

"Alkenyl" refers to a hydrocarbyl group containing normal, secondary, tertiary, or cyclic carbon atoms having at least one site of unsaturation, i.e., a carbon-carbon sp² double bond. Phrases containing this term, for example, "C₂₋₈ alkenyl" refers to alkenyl containing 2 to 8 carbon atoms. Suitable examples include, but are not limited to, ethenyl (-CH=CH₂), propenyl (-CH₂CH = CH₂), cyclopentenyl (-C₅H₇), and 5-hexenyl (-CH₂CH₂CH₂CH₂CH = CH₂).

"Aryl" can be used alone or as a relatively large moiety of "aralkyl", "aralkoxy", or "aryloxyalkyl" to refer to monocyclic, bicyclic, and tricyclic carbocyclic ring systems containing a total of 6 to 14 ring members, wherein at least one ring system is aromatic, and each ring system contains 3 to 7 ring members and has one or more points of attachment to the rest of the molecule. The term "aryl" may be used interchangeably with the term "aromatic ring", for example aromatic rings may include phenyl, naphthyl, and anthracenyl. The aryl may be substituted or unsubstituted, wherein the substituent may be, but is not limited to, deuterium, hydroxy, amino, halogen, cyano, aryl, heteroaryl, alkoxy, alkylamino, alkyl, alkenyl, alkynyl, heterocyclic, thiol, nitro, aryloxy, alkoxy substituted with hydroxy, alkyl-C(=O)- substituted with hydroxy, alkyl-C(=O)-, alkyl-S(=O)-, alkyl-S(=O)₂-, alkyl-S(=O)- substituted with hydroxy, alkyl-S(=O)₂- substituted with hydroxy, alkoxy substituted with carboxyl, and so on.

"Heteroaryl" can be used alone or as a relatively large moiety of "heteroarylalkyl" or "heteroarylalkoxy" to refer to monocyclic, bicyclic, and tricyclic carbocyclic ring systems containing a total of 5 to 14 ring members, wherein at least one ring system is aromatic and contains one or more heteroatoms, the heteroatoms having the meanings described herein; and each ring system contains 3 to 7 ring members and has one or more points of attachment to the rest of the molecule. The term "heteroaryl" may be used interchangeably with the term "heteroaromatic ring" or "heteroaromatic compound". The heteroaryl may be substituted or unsubstituted, wherein the substituent may be, but is not limited to, deuterium, hydroxy, amino, halogen, cyano, aryl, heteroaryl, alkoxy, alkylamino, alkyl, alkenyl, alkynyl, heterocyclic, thiol, nitro, aryloxy, alkoxy substituted with hydroxy, alkyl-C(=O)- substituted with hydroxy, alkyl-C(=O)-, alkyl-S(=O)-, alkyl-S(=O)₂-, alkyl-S(=O)- substituted with hydroxy, alkyl-S(=O)₂-substituted with hydroxy, alkoxy substituted with carboxyl, and so on.

"C₀₋₈ alkylsilyl" means that in 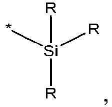 R is C₀₋₈ alkyl. It can be understood that when R is C₀ alkyl, in 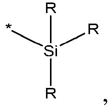 R does not contain a carbon atom, that is, R is H, which is equivalent to

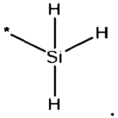

The term "alkoxy" means an alkyl group attached to the rest of the molecule via an oxygen atom, wherein the alkyl group has the meaning as defined herein. Unless otherwise specified, the alkoxy groups contain 2 to 5 carbon atoms. In one embodiment, an alkoxy group contains 1 to 4 carbon atoms; in yet another embodiment, an alkoxy group contains 1 to 3 carbon atoms. The alkoxy group may be optionally substituted with one or more substituents described herein.

The term "alkenyloxy" means an alkenyl group attached to the rest of the molecule via an oxygen atom, wherein the alkenyl group has the meaning as defined herein.

"Halogen" or "halogen atom" refers to F, Cl, Br, and I.

The amount of electrolyte additives only accounts for a small part of the electrolyte in the secondary battery, but an appropriate amount of the additives can form SEI (Solid Electrolyte Interface) on the surface of the negative electrode active material and CEI (Cathode Electrolyte Interface) on the surface of the positive electrode active material. SEI and CEI form films on the surfaces of the negative electrode active material and the positive electrode active material, addressing the issue of side reactions occurring after direct contact between the active materials and the electrolyte.

However, in a high-temperature or high-pressure environment, the cycle performance and storage performance of the battery are prone to significant degradation. In conventional secondary batteries, various additives are usually added to the electrolyte, which can form an SEI and a CEI on the surface of the active material, to improve the battery's cycle performance, high-temperature storage performance, and so on. However, the SEI and the CEI formed on the surface of the active material by conventional additives have a large internal resistance, and the SEI and the CEI are difficult to inhibit the continuous decomposition of the electrolyte on the positive electrode active material during the cycle of the battery. As a result, the thickness of the SEI and the CEI and the internal resistance of the secondary battery during the cycle continuously increase. Moreover, this cannot solve the problem that lithium hexafluorophosphate salt currently used commercially in large quantities has poor thermal stability. It is prone to decomposition reactions in high-temperature environments, deteriorates the quality of the electrolyte, and causes serious gas production of the battery under high-temperature conditions. These seriously affect the performances of the battery in terms of cycle and storage at high temperatures, and also affect the safety performance of the battery.

In view of the above, in a first aspect, the present disclosure provides an electrolyte additive. The electrolyte additive includes a first additive and a second additive. The first additive includes a compound containing element silicon and an unsaturated hydrocarbyl group, and the second additive includes a compound represented by Formula 1: 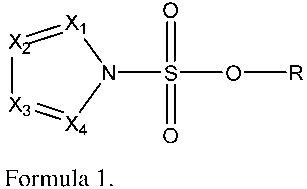 X₁, X₂, X₃, and X₄ are each independently selected from N or CH; R is selected from 5- to 6-membered aryl, 5- to 6-membered aryl substituted with R₀, 5- to 6-membered heteroaryl, 5- to 6-membered heteroaryl substituted with R₀, C₁₋₈ alkyl, C₁₋₈ alkyl substituted with R₀, C₂₋₈ alkenyl, C₂₋₈ alkenyl substituted with R₀, C₀₋₈ alkylsilyl, or C₀₋₈ alkylsilyl substituted with R₀; and R₀ is selected from C₁₋₆ alkyl, C₁₋₆ alkoxy, or halogen.

The use of the first additive will generate an SEI film containing an organic polymer with unsaturated bonds on the negative electrode surface of the battery. The presence of this polymer component improves the stability of the SEI film. However, with high-temperature cycle, the polymer component will continue to thicken, and the impedance of the SEI film will increase significantly. The use of the second additive will generate an SEI film containing lithium alkyl sulfonate (RSO₃Li) on the negative electrode surface. The presence of lithium alkyl sulfonate will not only improve the lithium-ion conductivity of the SEI film, but also inhibit the further thickening of the SEI film containing an organic polymer with unsaturated bonds generated by the first additive. Therefore, the synergistic use of the first additive and the second additive can form a protective layer with a three-dimensional network on the negative electrode of the battery, respectively providing a cross-linked protective layer to form an SEI film with high conductivity and high thermal stability. In this way, the formation of secondary particles aggregated at the battery interface, and the thickness and resistance of the SEI film are effectively reduced. This not only extends the cycle life of the battery at high temperatures, but also inhibits the expansion and gas production of the secondary battery in a high-temperature environment and the continuous increase in internal resistance during the cycle, thereby improving the high-temperature cycle performance and high-temperature storage performance of the battery.

In addition, the nitrogen-containing five-membered heterocyclic ring in the second additive contains a nitrogen atom with a lone electron pair, which makes the compound exhibit weak Lewis basicity in the electrolyte. It can form a hexaligand complex with phosphorus pentafluoride (PF₅) in the electrolyte, reducing the Lewis acidity and reaction activity of PF₅, thereby effectively inhibiting the increase in electrolyte acidity and stabilizing the quality of the electrolyte. However, the second additive also contains imidazole groups. At high temperatures, the imidazole groups are prone to attacking solvents in the electrolyte, such as cyclic carbonates (EC), causing serious gas production. The first additive can suppress this negative impact because the first additive containing unsaturated bonds has higher reactivity and will preferentially capture the imidazole groups on the second additive to prevent it from reacting with the solvent of the electrolyte to produce gas.

In some embodiments of the present disclosure, R₀ is selected from C₁₋₄ alkyl or halogen; further, R₀ is selected from halogen; and further, R₀ is selected from fluorine.

In some embodiments of the present disclosure, R in the compound represented by Formula 1 can be selected from: phenyl, thienyl, imidazolyl, pyridyl, fluorophenyl, fluorothienyl, fluoroimidazolyl, fluoropyridyl, methyl, ethyl, 1-propyl, 2-propyl, 1-butyl, 2-methyl-1-propyl, 2-butyl, fluoromethyl, fluoroethyl, fluoro-1-propyl, fluoro-2-propyl, fluoro-1-butyl, fluoro-2-methyl-1-propyl, fluoro-2-butyl, vinyl, propenyl, butenyl, fluorovinyl, fluoropropenyl, or fluorobutenyl.

In some embodiments of the present disclosure, R in the compound represented by Formula 1 is selected from: phenyl, fluorophenyl, imidazolyl, methyl, vinyl, or trifluoromethyl.

In some embodiments of the present disclosure, a mass ratio of the first additive to the second additive is (1 to 50): (1 to 50). For example, the mass ratio of the first additive to the second additive can be 1: 1, 1: 5, 1: 10, 1: 20, 1: 25, 1: 30, 1: 40, 1: 50, 3: 50, 2: 5, 5: 2, 50: 1, 25: 1, 50: 3, 10: 1, 5: 1, etc., or can be a range consisting of any of the above values. Therefore, by controlling the mass ratio of the first additive to the second additive within the above range, the effects of the first additive and the second additive can be fully exerted, and a protective layer with a three-dimensional network can be formed on the negative electrode of the battery, respectively providing a cross-linked protective layer, forming an SEI with high conductivity and high thermal stability. In this way, the formation of secondary particles aggregated at the battery interface, and the thickness and impedance of the SEI are effectively reduced, and high-temperature gas production are avoided, thereby improving the cycle performance and storage performance of the secondary battery at high temperature while ensuring the quality of the electrolyte at high temperature. In other embodiments of the present disclosure, the mass ratios of the first additive, the second additive, and the third additive are (1 to 30): (1 to 30), (1 to 20): (1 to 20), and (1 to 10): (1 to 10).

In some embodiments of the present disclosure, the first additive includes at least one of a compound represented by Formula 2or a compound represented by Formula 3, 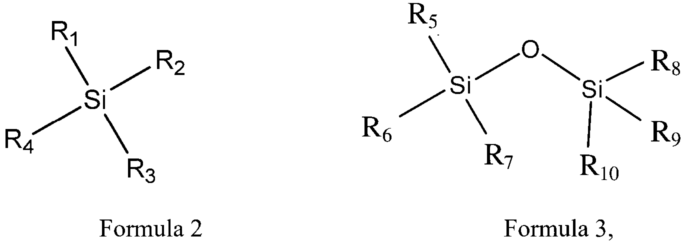 R₁, R₂, R₃, R₄, R₅, R₆, R₇, R₈, R₉, and R₁₀ are each independently selected from one of H, C₁-C₅ alkyl, C₂-C₅ alkenyl, C₂-C₅ alkynyl, C₂-C₅ alkoxy, or C₂-C₅ alkenyloxy; and at least one of R₁, R₂, R₃, R₄, R₅, R₆, R₇, R₈, R₉, or R₁₀ is an unsaturated hydrocarbyl group.

As an example, when R₁, R₂, R₃, R₄, R₅, R₆, R₇, R₈, R₉, and R₁₀ are each independently selected from C₁ to C₅ alkyl, the number of carbon atoms thereof may range from 1 to 5, 2 to 4, 3 to 4, etc.; and when R₁, R₂, R₃, R₄, R₅, R₆, R₇, R₈, R₉, and R₁₀ are each independently selected from one of C₂ to C₅ alkenyl, C₂ to C₅ alkynyl, and C₂ to C₅ alkoxy, the number of carbon atoms thereof may range from 2 to 5, 3 to 5, 3 to 4, 4 to 5, etc.

In some embodiments of the present disclosure, the first additive includes at least one of tetravinylsilane, tetramethyldivinyldisiloxane, vinyltrimethoxysilane, or allyloxytrimethylsilane.

Specifically, the structural formula for the above additives is as follows: 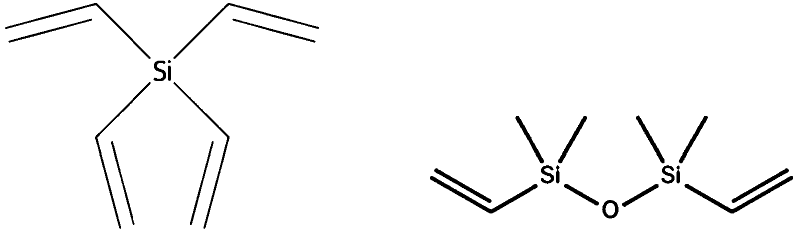 tetravinylsilane (CAS: 1112-55-6) tetramethyldivinyldisiloxane (CAS: 2627-95-4) 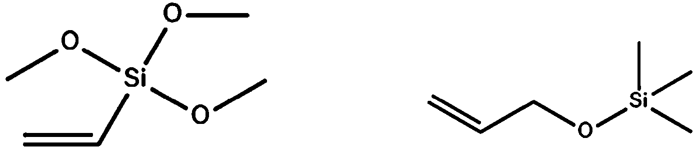 vinyltrimethoxysilane (CAS: 2768-02-7) allyloxytrimethylsilane (CAS: 18146-00-4).

Specifically, when the first additive uses at least one of the above substances, the first additive will have a higher HOMO energy level and can form an organic polymer film with Si-C as the main component on the interface of the negative electrode active material in prior to the solvent in the electrolyte, thereby reducing the direct contact between the negative electrode active material and the electrolyte. In this way, the decomposition and gas generation of other components in the electrolyte at the negative electrode interface under high temperature and high voltage is effectively reduced. At the same time, the first additive can function synergistically with the second additive to form a protective layer with a three-dimensional network on the negative electrode of the battery, forming an SEI with high conductivity and high thermal stability. In this way, the thickness and impedance of the SEI are reduced, and high-temperature gas production is avoided, thereby improving the cycle performance and storage performance of the secondary battery at high temperatures.

In some embodiments of the present disclosure, the second additive includes at least one of the following compounds:

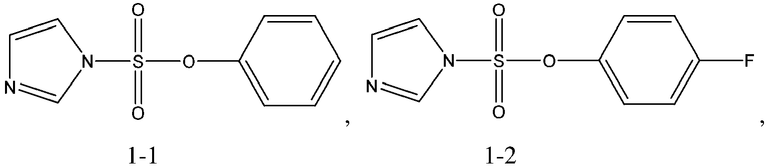

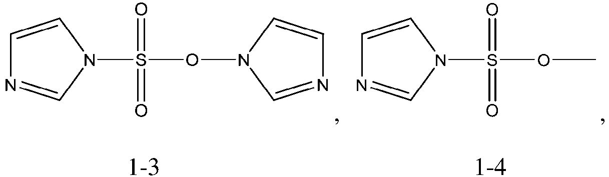

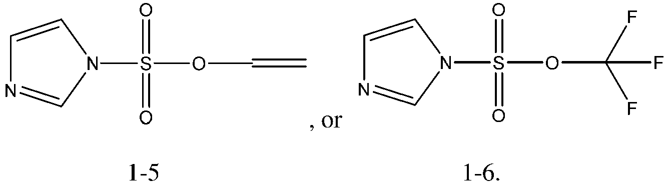

Specifically, when the second additive uses at least one of the above-mentioned substances, the nitrogen atom containing a lone electron pair in the five-membered heterocyclic ring can make the compound exhibit a weaker Lewis alkalinity in the electrolyte, thereby effectively inhibiting the increase in electrolyte acidity, stabilizing the quality of the electrolyte under high-temperature conditions, and inhibiting the gas production of the battery. In addition, the second additive can not only form an SEI film with high lithium-ion conductivity on the surface of the negative electrode, but also inhibit the further thickening of the SEI film of the organic polymer generated by the first additive, reduce the thickness of the SEI film, and reduce the resistance of the SEI film.

By adding the first additive and the second additive to the electrolyte, an SEI film with high conductivity and high thermal stability is formed on the negative electrode. On this basis, further exploration found that adding fluoroethylene carbonate (FEC) as the third additive can not only enhance the antioxidant capacity of the electrolyte, but also significantly improve the cycle performance of the battery under high-temperature conditions, thereby optimizing the overall performance and stability of the battery.

Fluoroethylene carbonate (FEC) has one more fluorine (-F) substituent group than EC. This group has a strong electron-withdrawing ability. It will undergo a reduction decomposition reaction at a higher potential. The generated fluorine-containing products will first occupy the active sites on the surface of the graphite electrode, effectively inhibiting the decomposition of the electrolyte solvent at a lower potential, thereby broadening the electrochemical stability window of the electrolyte and reducing the decomposition of the electrolyte at the active sites of the negative electrode. In addition, FEC can also form an SEI film rich in fluorine-containing inorganic components at the negative electrode, which can significantly reduce the impedance of the negative electrode during the recycling of the battery. Therefore, the addition of FEC can improve the antioxidant capacity of the electrolyte and the high-temperature cycle performance of the battery. However, FEC easily releases HF during high-temperature storage, causing the battery to produce gas, affecting its high-temperature storage performance. The addition of the first additive and the second additive can inhibit the occurrence of this negative impact. This is because the first additive containing element silicon can act as an alkaline electron donor, effectively complexing HF, PF₅, and H₂O, thereby stabilizing the stability of the electrolyte at high temperatures; and the Lewis alkalinity of the second additive can further capture HF, thereby improving the high-temperature storage performance of the battery cell.

In some embodiments of the present disclosure, a mass ratio of the first additive, the second additive, and the third additive is (1 to 50): (1 to 50): (2 to 50). For example, the mass ratio of the first additive, the second additive, and the third additive may be 1: 1: 2, 1: 1: 5, 2: 5: 10, 1: 1: 15, 10: 10: 1, 10: 10: 3, 1: 1: 1, 2: 2: 1, etc., or may be a range consisting of any of the above numerical values. Therefore, by controlling the mass ratio of the first additive, the second additive, and the third additive within the above range, the effects of the first additive, the second additive, and the third additive can be fully exerted to achieve the effect of 1+1+1>3. In this way, a protective layer with a three-dimensional network on the negative electrode of the battery is formed, respectively providing a cross-linked protective layer to form an SEI with high conductivity and high thermal stability. Further, the antioxidant performance of the electrolyte is improved and the probability of the electrolyte being decomposed at the negative electrode is reduced. Therefore, the cycle performance and storage performance of the secondary battery at high temperature is improved while the quality of the electrolyte at high temperature is ensured. In other embodiments of the present disclosure, the mass ratio of the first additive, the second additive, and the third additive is (1 to 30): (1 to 30): (2 to 20), (1 to 30): (1 to 30): (5 to 20), (1 to 20): (1 to 20): (5 to 20), or (1 to 10): (1 to 10): (5 to 20).

In a second aspect, the present disclosure provides an electrolyte, and the electrolyte includes the electrolyte additive according to the first aspect. Therefore, the electrolyte has all the characteristics and advantages of the aforementioned electrolyte additives, which will not be described in detail here. In general, by adding this electrolyte to the secondary battery, the expansion and gas production of the secondary battery at high temperature and the increase in internal resistance during the cycle is inhibited, thereby improving the high-temperature cycle performance and high-temperature storage performance of the battery.

In some embodiments of the present disclosure, based on a total mass of the electrolyte, a mass proportion of the first additive ranges from 0.1% to 5%. For example, it may be 0.1%, 0.5%, 1.0%, 1.5%, 2.0%, 2.5%, 3.0%, 3.5%, 4.0%, 4.5%, 5%, etc., or it may be a range consisting of any of the above values. Therefore, by controlling the content of the first additive within the above range, the first additive is conducive to forming an SEI film of organic polymer on the surface of the negative electrode of the battery, capturing the imidazole groups in the second additive. At the same time, the first additive can also complex the HF generated by the third additive during high-temperature storage, preventing it from reacting with the electrolyte solvent to produce gas, thereby improving the stability of the electrolyte at high temperature and the high-temperature storage performance of the battery cell. In other embodiments of the present disclosure, based on the total mass of the electrolyte, the mass proportion of the first additive ranges from 0.1% to 3%, for example, from 0.1% to 2%.

In some embodiments of the present disclosure, based on the total mass of the electrolyte, a mass proportion of the second additive ranges from 0.1% to 5%, for example, it may be 0.1%, 0.5%, 1.0%, 1.5%, 2.0%, 2.5%, 3.0%, 3.5%, 4.0%, 4.5%, 5%, etc., or it may be a range consisting of any of the above values. Therefore, by controlling the content of the second additive within the above range, the second additive is conducive to forming an SEI film with high lithium-ion conductivity on the surface of the negative electrode of the battery, while effectively inhibiting the thickening of the SEI film generated by the first additive and the increase in the acidity of the electrolyte and stabilizing the quality of the electrolyte. Therefore, it improves the cycle performance and storage performance of the secondary battery at high temperature. In other embodiments of the present disclosure, based on the total mass of the electrolyte, the mass proportion of the second additive ranges from 0.1% to 3%, for example, from 0.1% to 2%.

In some embodiments of the present disclosure, based on the total mass of the electrolyte, a mass proportion of the third additive ranges from 0.2% to 5%, for example, it may be 0.2%, 0.5%, 0.8%, 1%, 1.5%, 2%, 2.5%, 3%, 3.5%, 4%, 4.5%, 5%, etc., or it may be a range consisting of any of the above values. Therefore, by controlling the content of the third additive within the above range, the third additive is conducive to forming an SEI film rich in fluorine-containing inorganic components on the surface of the negative electrode, while improving the antioxidant performance of the electrolyte, inhibiting the decomposition of the electrolyte solvent at lower potentials, and improving the stability of the electrolyte. In other embodiments of the present disclosure, based on the total mass of the electrolyte, the mass proportion of the second additive ranges from 0.5% to 2%.

In some embodiments of the present disclosure, the electrolyte further includes a solvent, and the solvent includes at least one of ethylene carbonate, propylene carbonate, γ-butyrolactone, phenyl acetate, 1,4-butane sultone, 3,3,3-trifluoropropylene carbonate, dimethyl carbonate, ethyl methyl carbonate, diethyl carbonate, methyl propyl carbonate, methyl formate, ethyl acetate, methyl acetate, propyl acetate, butyl acetate, methyl propionate, ethyl propionate, propyl propionate, butyl propionate, methyl butyrate, ethyl butyrate, 1,2-dimethoxyethane, 2,2,3,3-tetrafluoro-1-(1,1,2,2-tetrafluoroethoxy)propane, methyl trifluoroethyl carbonate, ethyl(2,2,2-trifluoroethyl)carbonate, 2,2-difluoroethyl acetate, 2,2-difluoroethyl propionate, or 2,2-difluoroethyl methyl carbonate. The solvent in the electrolyte includes at least one of the above-mentioned substances, which is conducive to promoting the synergistic effect of the first additive, the second additive, and the third additive. In this way, an SEI with high conductivity and high thermal stability can be formed at the negative electrode of the battery, the thickness and resistance of the SEI film can be reduced, and the expansion and gas production of the secondary battery in a high temperature environment and the continuous increase in internal resistance during the cycle can be inhibited. Therefore, it improves the antioxidant performance of the electrolyte, and improves the cycle performance and storage performance of the secondary battery at high temperature. In other embodiments of the present disclosure, the solvent includes at least one of ethylene carbonate, dimethyl carbonate, ethyl methyl carbonate, or diethyl carbonate.

In some embodiments of the present disclosure, based on the total mass of the electrolyte, a mass proportion of the solvent ranges from 65% to 87%. For example, it may be 65%, 67%, 70%, 72%, 75%, 80%, 85%, 87%, etc. Therefore, controlling the content of the solvent within the above range is conducive to further promoting the synergistic effect of the first additive, the second additive, and the third additive. In this way, an SEI with high conductivity and high thermal stability can be formed at the negative electrode of the battery, the thickness and resistance of the SEI film can be reduced, and the expansion and gas production of the secondary battery in a high temperature environment and the continuous increase in internal resistance during the cycle can be inhibited. Therefore, it improves the antioxidant performance of the electrolyte, and improves the cycle performance and storage performance of the secondary battery at high temperature.

In some embodiments of the present disclosure, the electrolyte further includes a lithium salt, and the lithium salt includes at least one of lithium hexafluorophosphate, lithium bis(fluorosulfonyl)imide, lithium tetrafluoroborate, lithium bis(oxalato)borate, lithium difluoro(oxalato)borate, lithium difluoro(oxalato)phosphate, lithium tetrafluoro(oxalato)phosphate, or lithium bis(trifluoromethanesulfonyl)imide.

In some embodiments of the present disclosure, based on the total mass of the electrolyte, the mass proportion of the lithium salt ranges from 5% to 20%, for example, it may be 5%, 10%, 15%, 20%, etc.

In a third aspect, the present disclosure provides a battery. According to an embodiment of the present disclosure, the battery includes the electrolyte according to the second aspect.

Therefore, during the formation and cycling process of the battery, the battery containing the electrolyte uses the first additive, the second additive, and the third additive simultaneously. In this way, the three additives can function synergistically to avoid their respective shortcomings and achieve the effect of 1+1+1>3. The first additive generates an SEI of an organic polymer containing unsaturated bonds on the surface of the negative electrode of the battery. The use of the second additive will generate an SEI containing alkyl lithium sulfonate (RSO₃Li) on the surface of the negative electrode. The presence of alkyl lithium sulfonate makes the lithium-ion conductivity of SEI higher, and can also react with the SEI of the organic polymer containing unsaturated bonds generated by the first additive to inhibit the further thickening of the SEI film of the organic polymer. At the same time, the third additive forms a film at the negative electrode, reduces the impedance of the negative electrode during the recycling of the battery, improves the antioxidant performance of the electrolyte, and improves the cycle performance and storage performance of the battery at high temperature.

Typically, a battery cell includes a positive electrode plate, a negative electrode plate, a separator, and an electrolyte. During the charge and discharge process of the battery, active metal ions intercalate and deintercalate back and forth between the positive electrode plate and the negative electrode plate. The separator is set between the positive electrode plate and the negative electrode plate to play an isolation role. The electrolyte conducts active metal ions between the positive electrode plate and the negative electrode plate.

### [Positive electrode plate]

In some embodiments of the present disclosure, the positive electrode plate includes a positive electrode current collector, which can be a metal foil, foam metal, or a composite current collector. For example, as the metal foil, aluminum or stainless steel surface-treated with silver, stainless steel, copper, aluminum, nickel, carbon electrode, carbon, or titanium can be used. The composite current collector may include a polymer substrate and a metal layer. The foam metal can be foam nickel, foam copper, foam aluminum, foam alloy, etc. The composite current collector can be formed by forming a metal material (aluminum, aluminum alloy, nickel, nickel alloy, titanium, titanium alloy, silver and silver alloy, etc.) on a polymer substrate material (such as polypropylene, polyethylene terephthalate, polybutylene terephthalate, polystyrene, polyethylene, etc.).

In some embodiments of the present disclosure, the positive electrode plate may further include a positive electrode active material layer, and the positive electrode active material layer includes a positive electrode active material. The specific type of the positive electrode active material is not limited, and active materials known in the art that can be used for the positive electrode of the battery can be used. Those skilled in the art can select according to actual needs.

In some embodiments of the present disclosure, when the battery is a lithium-ion battery, the positive electrode active material includes at least one of LiCoO₂, LiMn₂O₄, LiMnO₂, Li₂MnO₄, LiFePO₄, Li₁₊ₐMn₁₋ₓMₓO₂, LiCo₁₋ₓMₓO₃, LiFe₁₋ₓMₓPO₄, or Li₂Mn₁₋ₓO₄, where M includes at least one of Ni, Co, Mn, Al, Cr, Mg, Zr, Mo, V, Ti, B, or F, where 0≤a<0.2, and 0≤x<1.

For example, 0≤a≤0.19, 0.05≤a≤0.15, 0.08≤a≤0.13, 0.1≤a≤0.12; 0≤x≤0.9, 0.1≤x≤0.8, 0.2≤x≤0.7, 0.3≤x≤0.6, 0.4≤x≤0.5, etc.

It can be understood that in Li₁₊ₐMn₁₋ₓMₓO₂, LiCo₁₋ₓMₓO₂, and LiFe₁₋ₓMₓPO₄, the selection of M in each chemical formula is independent and does not mutually affect other selections, and may be the same or different. Similarly, in the list of the above-mentioned positive electrode active materials, the selection of a and x is also independent of each other, does not affect each other, and may be the same or different.

In some other embodiments of the present disclosure, the positive electrode active material includes a lithium iron phosphate positive electrode active material (LiFePO₄, LiFe₁₋ₓMₓPO₄). Specifically, compared with other positive electrode active materials (such as ternary materials), the lithium iron phosphate positive electrode active material has a lower voltage platform and better stability. In this way, the battery of the present disclosure can be charged and discharged at a low voltage. At high temperature and low pressure, the lithium iron phosphate positive electrode active material matches with the additive of the present disclosure, which can further reduce the probability of the decomposition of the SEI with three-dimensional network, reduce gas production of the battery, and improve the cycle performance and storage performance of the battery at high temperature.

When the battery is a sodium-ion battery, the positive electrode active material may include at least one of NaₓMO₂, where M includes at least one of Ti, V, Mn, Co, Ni, Fe, Zn, V, Zr, Ce, Cr, or Cu, and 0<x≤1; Polyanionic compounds: including at least one of NaFePO₄, Na₃V₂(PO₄)₃ (sodium vanadium phosphate, abbreviated as NVP), Na₄Fe₃(PO₄)₂(P₂O₇), NaM'PO₄F (M' includes at least one of V, Fe, Mn, or Ni), or Na₃(VO_{y})₂(PO₄)₂F_{3-2y} (0≤y≤1); or Prussian blue compounds: NaₐMe_{b}Me'_{c}(CN)₆, where Me and Me' each independently include at least one of Ni, Cu, Fe, Mn, Co, or Zn, 0<a≤2, 0<b<1, and 0<c<1.

In some embodiments, the positive electrode active material includes at least one of Na_{X1}M1O₂, Naₓ₂M2[M3(CN)₆], NaFePO₄, Na₃V₂(PO₄)₃, Na₂M4P₂O₇, Na₂Fe₂(SO₄)₃, or Na₂M4(SO₄)₂·2H₂O, where 0<x1≤1, M1 includes at least one of Ni, Co, Mn, Fe, or Cu, 0<x2<6, M2 includes at least one of Ni, Fe, or Mn, M3 includes at least one of Fe or Mn, and M4 includes at least one of Fe, Co, Mn, or Cu. The above-mentioned positive electrode active material has a high operating voltage, and matches with the electrolyte additive according to the embodiment of the present disclosure. In this way, an SEI with a three-dimensional network can be better formed; and at high voltage, the SEI is highly stable, which can reduce gas production of the battery and improve the cycle performance and storage performance of the battery at high temperatures.

In some embodiments of the present disclosure, the positive electrode active material layer may further optionally include a conductive agent. As an example, the conductive agent may include at least one of superconducting carbon, acetylene black, carbon black, Ketjen black, carbon dots, carbon nanotubes, graphene, or carbon nanofibers.

In some embodiments of the present disclosure, the positive electrode active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments of the present disclosure, the positive electrode plate can be prepared by the following method: dispersing the components for preparing the positive electrode plate, such as the positive electrode active material, the conductive agent, and the binder, in a solvent (such as N-methylpyrrolidone), to form a positive electrode slurry; coating the positive electrode slurry on the positive electrode collector; and obtaining the positive electrode plate after drying, cold pressing, and other processes.

### [Negative electrode plate]

The negative electrode plate includes a negative electrode current collector and a negative electrode active material layer disposed on at least one side surface of the negative electrode current collector. The negative electrode active material layer includes the negative electrode active material.

In some embodiments of the present disclosure, the negative electrode current collector may contain a metal foil or a composite current collector. For example, a copper foil can be used as the metal foil. The composite current collector may include a polymer substrate and a metal layer formed on at least one surface of the polymer material base layer. The composite current collector can be formed by forming a metal material (copper, copper alloy, nickel, nickel alloy, etc.) on a polymer substrate material (such as polypropylene (PP), polyethylene terephthalate (PET), polybutylene terephthalate (PBT), etc.).

In some embodiments of the present disclosure, the negative electrode active material may be a negative electrode active material for batteries known in the art. As an example, the negative electrode active material may include at least one of natural graphite, artificial graphite, soft carbon, hard carbon, mesophase carbon microbeads, nanocarbon, elemental silicon, silicon oxides, silicon-carbon composites, silicon alloys, elemental tin, tin oxides, tin-carbon composites, tin alloys, or lithium titanate.

In some embodiments of the present disclosure, the negative electrode active material layer may further include a binder. The binder may include at least one of styrenebutadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present disclosure, the negative electrode active material layer may further include a conductive agent. The conductive agent may include at least one of superconducting carbon, acetylene black, carbon black, Ketjen black, carbon dots, carbon nanotubes, graphene, or carbon nanofibers.

In some embodiments of the present disclosure, the negative electrode active material layer may optionally further include additional additives, such as a thickener (e.g., sodium carboxymethyl cellulose (CMC-Na)).

In some embodiments of the present disclosure, the negative electrode plate can be prepared by the following method: dispersing the components for preparing the negative electrode plate, such as the negative electrode active material, the conductive agent, the binder, and any other components, in a solvent (such as deionized water), to form a negative electrode slurry; coating the negative electrode slurry on the negative electrode current collector, and obtaining the negative electrode plate after drying, cold pressing, and other processes.

The present disclosure has no particular limitation on the type of the separator, and any known separator with a porous structure having good chemical stability and mechanical stability can be selected.

In some embodiments of the present disclosure, the material of the separator may include at least one of glass fiber, non-woven fabric, polyolefin film, aromatic polyamide film, polytetrafluoroethylene film, or polyethersulfone film.

In some embodiments of the present disclosure, the thickness of the separator may range from 10 µm to 12 µm, for example, 10 µm, 11 µm, 12 µm, etc.

The embodiments of the present disclosure are described in detail below. It should be noted that the embodiments described below are exemplary; and are only used to explain the present disclosure, and should not be understood as limiting the present disclosure. In addition, unless otherwise specified, all reagents used in the following examples are commercially available or can be synthesized according to the methods herein or known methods. Reaction conditions not listed are also readily available to those skilled in the art.

### Example 1

### 1. Preparation of a positive electrode plate

A positive electrode active material lithium iron phosphate material (purchased from Defang Nano), a conductive agent carbon black, a conductive agent carbon nanotube, and a binder polyvinylidene fluoride in a mass ratio of 94.5: 3.5: 0.5: 1.5 were dispersed in a solvent N-methylpyrrolidone, to obtain a positive electrode active substance layer slurry. The positive electrode active substance layer slurry was evenly coated on the surface of a positive electrode current collector aluminum foil, and after drying, rolling, baking, slitting, and spot welding of the tabs, the positive electrode plate was obtained. The total thickness of the positive electrode plate was 90 µm.

### 2. Preparation of a negative electrode plate

A negative electrode active material graphite (purchased from Jiangxi Zichen), the conductive agent carbon black, the binder polyvinylidene fluoride, and sodium carboxymethyl cellulose in a mass ratio of 94.5: 2: 2: 1.5 were dispersed in deionized water and stirred evenly, to obtain a negative electrode active substance layer slurry. The negative electrode active substance layer slurry was evenly coated on the surface of a negative electrode current collector copper foil, and the negative electrode plate was obtained after drying, rolling, baking, slitting, and spot welding of the tabs. The total thickness of the negative electrode plate was 128 µm.

### 3. Preparation of an electrolyte

EC and EMC were mixed in a mass ratio of 3: 7. After mixing, a lithium salt, a first additive, and a second additive were added at their respective molar concentrations and mass fractions, and the mixture was evenly mixed to obtain the electrolyte. The organic solvent included ethylene carbonate (EC) and ethyl methyl carbonate (EMC), with a mass ratio of 3: 7. The lithium salt included LiPF₆, and the molar concentration of the lithium salt in the electrolyte was 1 mol/L. The first additive included tetravinylsilane with a mass accounting for 0.2% of the total mass of the electrolyte; and the second additive was Compound 1-1 with a mass accounting for 0.5% of the total mass of the electrolyte.

### 4. Separator

A 10 µm polyethylene film was used as the separator.

### 5. Preparation of a lithium-ion battery

The positive electrode plate, the separator, and the negative electrode plate were stacked in order, with the separator placed between the positive electrode plate and the negative electrode plate to isolate the positive electrode and the negative electrode, and wound to obtain a bare battery cell. The tabs were welded. The bare battery cell was placed in an outer package, and the prepared electrolyte was injected into the dried battery cell. After processes such as packaging, standing, forming, and shaping, the lithium-ion battery was prepared.

The preparation methods of the lithium-ion batteries in Examples 2 to 31 and Comparative Examples 1 to 5 differ from that of Example 1 in that the composition of the additive in the electrolyte was different, as shown in Table 1.

**[Table 1]**

| | First additive | Content of first additive % | Second additive | Content of second additive % | Third additive | Content of third additive % | Mass ratio between additives | Solvent (wt: wt) |
|---|---|---|---|---|---|---|---|---|
| Example 1 | tetraviny lsilane | 0.1% | 1-1 | 0.5% | / | / | 1: 5 | EC: EMC=3: 7 |
| Example 2 | tetraviny lsilane | 0.5% | 1-1 | 0.5% | / | / | 1: 1 | EC: EMC=3: 7 |
| Example 3 | tetraviny lsilane | 1% | 1-1 | 0.5% | / | / | 2: 1 | EC: EMC=3: 7 |
| Example 4 | tetraviny lsilane | 3% | 1-1 | 0.5% | / | / | 6: 1 | EC: EMC=3: 7 |
| Example 5 | tetraviny lsilane | 5% | 1-1 | 0.5% | / | / | 10: 1 | EC: EMC=3: 7 |
| Example 6 | tetraviny lsilane | 0.5% | 1-1 | 0.1% | / | / | 5: 1 | EC: EMC=3: 7 |
| Example 7 | tetraviny lsilane | 0.5% | 1-1 | 0.5% | / | / | 1: 1 | EC: EMC=3: 7 |
| Example 8 | tetraviny lsilane | 0.5% | 1-1 | 1% | / | / | 1: 2 | EC: EMC=3: 7 |
| Example 9 | tetraviny lsilane | 0.5% | 1-1 | 3% | / | / | 1: 6 | EC: EMC=3: 7 |
| Example 10 | tetraviny lsilane | 0.5% | 1-1 | 5% | / | / | 1: 10 | EC: EMC=3: 7 |
| Example 11 | tetraviny lsilane | 0.5% | 1-1 | 0.5% | FEC | 1% | 1: 1: 2 | EC: EMC=3: 7 |
| Example 12 | tetraviny lsilane | 0.5% | 1-1 | 0.5% | FEC | 0.2% | 5: 5: 2 | EC: EMC=3: 7 |
| Example 13 | tetraviny lsilane | 0.5% | 1-1 | 0.5% | FEC | 0.5% | 1: 1: 1 | EC: EMC=3: 7 |
| Example 14 | tetraviny lsilane | 0.5% | 1-1 | 0.5% | FEC | 1.5% | 1: 1: 3 | EC: EMC=3: 7 |
| Example 15 | tetraviny lsilane | 0.5% | 1-1 | 0.5% | FEC | 2% | 1: 1: 4 | EC: EMC=3: 7 |
| Example 16 | tetraviny lsilane | 0.5% | 1-1 | 0.5% | FEC | 5% | 1: 1: 10 | EC: EMC=3: 7 |
| Example 17 | tetramet hyldivin yldisilox ane | 0.2% | 1-1 | 0.5% | FEC | 1% | 0.4: 1: 2 | EC: EMC=3: 7 |
| Example 18 | tetramet hyldivin yldisilox ane | 0.5% | 1-1 | 0.5% | FEC | 1% | 1: 1: 2 | EC: EMC=3: 7 |
| Example 19 | tetramet hyldivin yldisilox ane | 1% | 1-1 | 0.5% | FEC | 1% | 2: 1: 2 | EC: EMC=3: 7 |
| Example 20 | tetramet hyldivin yldisilox ane | 2% | 1-1 | 0.5% | FEC | 1% | 4: 1: 2 | EC: EMC=3: 7 |
| Example 21 | vinyltrim ethoxysil ane | 0.5% | 1-1 | 0.5% | FEC | 1% | 1: 1: 2 | EC: EMC=3: 7 |
| Example 22 | allyloxyt rimethyl silane | 0.5% | 1-1 | 0.5% | FEC | 1% | 1: 1: 2 | EC: EMC=3: 7 |
| Example 23 | tetraviny lsilane | 0.5% | 1-2 | 0.5% | FEC | 1% | 1: 1: 2 | EC: EMC=3: 7 |
| Example 24 | tetraviny lsilane | 0.5% | 1-3 | 0.5% | FEC | 1% | 1: 1: 2 | EC: EMC=3: 7 |
| Example 25 | tetraviny lsilane | 0.5% | 1-4 | 0.5% | FEC | 1% | 1: 1: 2 | EC: EMC=3: 7 |
| Example 26 | tetraviny lsilane | 0.5% | 1-5 | 0.5% | FEC | 1% | 1: 1: 2 | EC: EMC=3: 7 |
| Example 27 | tetraviny lsilane | 0.5% | 1-6 | 0.5% | FEC | 1% | 1: 1: 2 | EC: EMC=3: 7 |
| Example 28 | tetraviny lsilane | 0.1% | 1-1 | 5% | FEC | 5% | 1: 50: 50 | EC: EMC=3: 7 |
| Example 29 | tetraviny lsilane | 5% | 1-1 | 0.1% | FEC | 5% | 50: 1: 50 | EC: EMC=3: 7 |
| Example 30 | tetraviny lsilane | 0.1% | 1-1 | 3% | FEC | 2% | 1: 30: 20 | EC: EMC=3: 7 |
| Example 31 | tetraviny lsilane | 3% | 1-1 | 0.1% | FEC | 2% | 30: 1: 20 | EC: EMC=3: 7 |
| Compar ative Example 1 | tetraviny lsilane | 1% | / | / | / | / | / | EC: EMC=3: 7 |
| Compar ative Example 2 | / | / | 1-1 | 1% | / | / | / | EC: EMC=3: 7 |
| Compar ative Example 3 | tetraviny lsilane | 1% | / | / | FEC | 1% | 1: 1 | EC: EMC=3: 7 |
| Compar ative Example 4 | tetramet hyldivin yldisilox ane | 1% | / | / | FEC | 1% | 1: 1 | EC: EMC=3: 7 |
| Compar ative Example 5 | / | / | 1-1 | 1% | FEC | 1% | 1: 1 | EC: EMC=3: 7 |

### Example 32

A lithium-ion battery was prepared in substantially the same manner as in Example 1, except that the positive electrode active material in Example 32 was selected from lithium cobalt oxide (LiCoO₂) purchased from XTC New Energy Materials (Xiamen) Co., Ltd.

The preparation method of the lithium-ion batteries of Examples 33 to 34 was basically the same as that of Example 32, except that the positive electrode active materials of the lithium-ion batteries were different, all of which were purchased from XTC New Energy Materials (Xiamen) Co., Ltd., as shown in Table 2.

The preparation methods of the lithium-ion batteries of Examples 35 to 37 were basically the same as those of Examples 32 to 34, except that the composition of the additives in the electrolyte was different, as shown in Table 2.

**[Table 2]**

| | Positive electrode active material | First additi ve | Content of first additive % | Second additiv e | Conten t of second additiv e% | Third additi ve | Content of third additive % | Mass ratio between additives | Solvent (wt: wt) |
|---|---|---|---|---|---|---|---|---|---|
| Example 32 | Lithium cobalt oxide | tetrav inylsi lane | 0.5% | 1-1 | 0.5% | / | / | 2: 1 | EC: EMC=3: 7 |
| Example 33 | Lithium mangane se oxide | tetrav inylsi lane | 0.5% | 1-1 | 0.5% | / | / | 2: 1 | EC: EMC=3: 7 |
| Example 34 | Lithium nickel mangane se oxide | tetrav inylsi lane | 0.5% | 1-1 | 0.5% | / | / | 2: 1 | EC: EMC=3: 7 |
| Example 35 | Lithium cobalt oxide | tetrav inylsi lane | 0.5% | 1-1 | 0.5% | FEC | 1% | 1: 1: 2 | EC: EMC=3: 7 |
| Example 36 | Lithium mangane se oxide | tetrav inylsi lane | 0.5% | 1-1 | 0.5% | FEC | 1% | 1: 1: 2 | EC: EMC=3: 7 |
| Example 37 | Lithium nickel mangane se oxide | tetrav inylsi lane | 0.5% | 1-1 | 0.5% | FEC | 1% | 1: 1: 2 | EC: EMC=3: 7 |

### Example 38

### 1. Preparation of the positive electrode plate

The positive electrode active material Na(Ni_{0.33}Fe_{0.33}Mn_{0.33})O₂, the conductive agent carbon black, the conductive agent carbon nanotube, and the binder polyvinylidene fluoride in a mass ratio of 94.5: 3.5: 0.5: 1.5 were dispersed in a solvent N-methylpyrrolidone, to obtain a positive electrode active substance layer slurry. The positive electrode active substance layer slurry was evenly coated on the surface of a positive electrode current collector aluminum foil, and after drying, rolling, baking, slitting, and spot welding of the tabs, the positive electrode plate was obtained. The total thickness of the positive electrode plate was 90 µm.

### 2. Preparation of the negative electrode plate

The negative electrode active material graphite (purchased from Jiangxi Zichen), the conductive agent carbon black, the binder polyvinylidene fluoride, and sodium carboxymethyl cellulose in a mass ratio of 94.5: 2: 2: 1.5 were dispersed in deionized water and stirred evenly, to obtain a negative electrode active substance layer slurry. The negative electrode active substance layer slurry was evenly coated on the surface of a negative electrode current collector copper foil, and the negative electrode plate was obtained after drying, rolling, baking, slitting, and spot welding of the tabs. The total thickness of the negative electrode plate was 128 µm.

### 3. Preparation of the electrolyte

EC and EMC were mixed in a mass ratio of 3: 7. After mixing, a sodium salt, a first additive, and a second additive were added in the molar concentration and mass fraction of each component, and the mixture was evenly mixed to obtain the electrolyte. The organic solvent included ethylene carbonate (EC) and ethyl methyl carbonate (EMC), with a mass ratio of 3: 7. The sodium salt included NaPF₆, and the molar concentration of sodium in the electrolyte was 1 mol/L. The first additive included tetravinylsilane with a mass accounting for 0.2% of the total mass of the electrolyte; and the second additive was Compound 1-1 with a mass accounting for 0.5% of the total mass of the electrolyte.

### 4. Separator

A 10 µm polyethylene film was used as the separator.

### 5. Preparation of a sodium-ion battery

The positive electrode plate, the separator, and the negative electrode plate were stacked in order, with the separator placed between the positive electrode plate and the negative electrode plate to isolate the positive electrode and the negative electrode, and wound to obtain a bare battery cell. The tabs were welded. The bare battery cell was placed in an outer package, and the prepared electrolyte was injected into the dried battery cell. After processes such as packaging, standing, forming, and shaping, the sodium-ion battery was prepared.

The preparation methods of the sodium-ion batteries of Examples 39 to 45 differ from those of Example 38 in that the composition of the additive in the electrolyte was different, as shown in Table 3.

**[Table 3]**

| | First additive | Content of first additive % | Second additive | Content of second additive % | Third additive | Content of third additive % | Mass ratio between additives | Solvent (wt: wt) |
|---|---|---|---|---|---|---|---|---|
| Example 38 | tetraviny lsilane | 0.5% | 1-1 | 0.5% | / | / | 1: 1 | EC: EMC=3: 7 |
| Example 39 | tetraviny lsilane | 0.1% | 1-1 | 0.5% | / | / | 1: 5 | EC: EMC=3: 7 |
| Example 40 | tetraviny lsilane | 5% | 1-1 | 0.5% | / | / | 10: 1 | EC: EMC=3: 7 |
| Example 41 | tetraviny lsilane | 0.5% | 1-1 | 0.1% | / | / | 5: 1 | EC: EMC=3: 7 |
| Example 42 | tetraviny lsilane | 0.5% | 1-1 | 5% | / | / | 1: 10 | EC: EMC=3: 7 |
| Example 43 | tetraviny lsilane | 0.5% | 1-1 | 0.5% | FEC | 1% | 1: 1: 2 | EC: EMC=3: 7 |
| Example 44 | tetraviny lsilane | 0.5% | 1-1 | 0.5% | FEC | 0.2% | 5: 5: 2 | EC: EMC=3: 7 |
| Example 45 | tetraviny lsilane | 0.5% | 1-1 | 0.5% | FEC | 5% | 1: 1: 10 | EC: EMC=3: 7 |

The high-temperature storage performance and high-temperature cycle performance of the secondary batteries obtained in Examples 1 to 31, Examples 32 to 37, and Comparative Examples 1 to 5 were characterized. The characterization results were shown in Tables 4 and 5.

### 1. At 45°C, capacity retention test was performed on the battery after 800 cycles:

At 45°C, the battery was charged to 3.65 V at a constant current of 1C and a constant voltage. After standing for 5 minutes, the battery was discharged to 2.0 V at a constant current of 1C. The capacity retention rate was calculated after 800 cycles. Calculation method: Capacity retention rate (%) = (1500-th discharge capacity/1st discharge capacity) × 100%, see Table 3.

### 2. High temperature storage performance test:

Swelling rate test: At 25°C, the battery was charged to 3.65V at a constant current of 1C and a constant voltage, and the initial thickness of the lithium-ion battery at this time was measured. Then the battery was stored at 60°C for 30 days, and the thickness of the lithium-ion battery was measured. The swelling rate of the battery was calculated according to the formula: Swelling rate (%) = (thickness after storage - initial thickness) / initial thickness × 100%.

Cycle performance test: After high-temperature storage, the lithium-ion battery was discharged at 1C to 2.0 V, and the capacity retention rate of the battery was tested and calculated using the following formula: Capacity retention rate (%) = retained capacity / initial capacity × 100%.

DCR growth rate test: Secondary battery DC resistance (DCR) test: DCR test before storage: At an ambient temperature of 25°C, the battery was charged at a constant current of 1.0C to 3.65V, a constant voltage of 3.65V to a cut-off current of 0.05C, then the battery was left for 30 minutes. The battery was discharge at 1.0C for 30 minutes (adjusted to 50% SOC), and the end voltage V1 was recorded. The battery was rested for 1 hour and then discharged at 2.0C for 10s, and the end voltage V2 was recorded. DCR1 before storage = (V1-V2)/(2.0C-1.0C). DCR test after storage at 60°C for 30 days: At an ambient temperature of 25°C, the stored battery was charged at a constant current of 1.0C to 3.65V, a constant voltage of 3.65V to a cut-off current of 0.05C. The battery was then left for 30 minutes and discharged at 1.0C for 30 minutes (adjusted to 50% SOC). The end voltage V3 was recorded. The battery was rested for 1 hour and then discharged at 2.0C for 10s, and the end voltage V4 was recorded. DCR2 before storage = (V3-V4)/(2.0C-1.0C). DCR growth rate was (DCR2-DCR1)/DCR1×100%.

**[Table 4]**

| | Capacity retention rate for 800 cycles at 45°C (%) | High-temperature storage at 60°C for 30 days | | |
|---|---|---|---|---|
| | | Capacity retention rate (%) | Swelling rate (%) | DCR growth rate (%) |
| Example 1 | 86.8 | 85.9 | 4.8 | 25.9 |
| Example 2 | 87.1 | 86.3 | 4.5 | 25.5 |
| Example 3 | 86.4 | 86.0 | 4.7 | 26.5 |
| Example 4 | 86.3 | 86.1 | 4.6 | 26.8 |
| Example 5 | 85.9 | 85.4 | 5.2 | 27.1 |
| Example 6 | 86.7 | 86.1 | 5.1 | 26.4 |
| Example 7 | 86.9 | 85.8 | 5.0 | 26.3 |
| Example 8 | 86.8 | 85.9 | 5.1 | 26.1 |
| Example 9 | 86.5 | 86.2 | 5.2 | 25.8 |
| Example 10 | 86.4 | 85.5 | 5.3 | 27.0 |
| Example 11 | 96.5 | 95.5 | 1.4 | 19.2 |
| Example 12 | 90.8 | 89.8 | 1.5 | 22.9 |
| Example 13 | 92.1 | 90.1 | 1.5 | 22.5 |
| Example 14 | 92.8 | 90.5 | 2.5 | 21.9 |
| Example 15 | 93.1 | 90.9 | 2.9 | 21.5 |
| Example 16 | 90.5 | 89.6 | 3.8 | 22.8 |
| Example 17 | 92.6 | 92.3 | 2.5 | 21.9 |
| Example 18 | 94.5 | 95.2 | 2.8 | 20.4 |
| Example 19 | 91.2 | 91.6 | 3.1 | 22.3 |
| Example 20 | 90.5 | 90.5 | 2.7 | 24.4 |
| Example 21 | 94.4 | 93.3 | 2.6 | 20.5 |
| Example 22 | 93.6 | 93.6 | 2.8 | 21 |
| Example 23 | 93.4 | 91.5 | 2.8 | 21.2 |
| Example 24 | 91.9 | 93.3 | 2.9 | 21.4 |
| Example 25 | 92.4 | 93.1 | 2.7 | 21.3 |
| Example 26 | 91.7 | 91.3 | 3.2 | 22 |
| Example 27 | 92.6 | 93.7 | 3.3 | 20.7 |
| Example 28 | 89.9 | 89.3 | 4.3 | 23.7 |
| Example 29 | 89.7 | 89.5 | 4.2 | 23.9 |
| Example 30 | 90.1 | 89.4 | 4.1 | 23.1 |
| Example 31 | 90.3 | 89.2 | 3.9 | 23.5 |
| Comparative Example 1 | 79.8 | 78.9 | 8.4 | 41.5 |
| Comparative Example 2 | 79.5 | 78.6 | 8.9 | 40.4 |
| Comparative Example 3 | 80.8 | 82.7 | 7.5 | 38.6 |
| Comparative Example 4 | 81.6 | 81.2 | 6.8 | 39.4 |
| Comparative Example 5 | 82.3 | 82.6 | 8.4 | 29.9 |

**[Table 5]**

| | Capacity retention rate for 800 cycles at 45°C (%) | High-temperature storage at 60°C for 30 days | | |
|---|---|---|---|---|
| | | Capacity retention rate (%) | Swelling rate (%) | DCR growth rate (%) |
| Example 32 | 87.5 | 86.9 | 4.3 | 25.1 |
| Example 33 | 86.8 | 85.9 | 4.8 | 25.9 |
| Example 34 | 87.9 | 87.1 | 4.4 | 24.9 |
| Example 35 | 95.5 | 94.3 | 1.8 | 19.8 |
| Example 36 | 95.9 | 94.9 | 1.6 | 19.7 |
| Example 37 | 94.7 | 93.8 | 1.7 | 20.1 |

As can be seen from Table 4, in Examples 1 to 10 of the present disclosure, the first additive and the second additive act synergistically to reduce the gas production of the battery, improve the high-temperature cycle performance and high-temperature storage performance of the battery, and inhibit the impedance (DCR) growth of the battery. After the third additive is added, it can be seen in Examples 11 to 31 that the high-temperature cycle performance and high-temperature storage performance of the battery are more significantly improved, and the effect of inhibiting the impedance (DCR) growth of the battery is also more obvious.

Compared with Examples 11 to 31, in Comparative Examples 1-4, the first additive, the second additive, and the third additive were not added at the same time. The gas production performance was significantly higher, high-temperature cycle performance and high-temperature storage performance of the batteries were significantly lower, and the impedance (DCR) was significantly increased. It can be seen that in the electrolyte additive of the present disclosure, when the first additive, the second additive, and the third additive are added to the secondary battery, they act synergistically to reduce the gas production of the battery, improve the high-temperature cycle performance and high-temperature storage performance of the battery, and inhibit the impedance growth of the battery.

The high-temperature cycle performance, high-temperature storage gas production performance, capacity retention rate, and DCR growth rate of the batteries in other examples of Examples 1 to 5 are significantly better than those in Example 5. This is because the addition amount of the first additive (5%) in Example 5 is higher than that in other examples. The possible reason is that the first additive is used excessively. The additive itself undergoes continuous decomposition to form the film, resulting in increased impedance and gas production by side reactions, thereby deteriorating the performance of the battery.

The high-temperature cycle performance, high-temperature storage gas production performance, capacity retention rate, and DCR growth rate of the batteries in other examples of Examples 6 to 10 are significantly better than those in Example 10. This is because the addition amount of the second additive in Example 10 (5%) is higher than that in other examples. The possible reason is that the second additive is used excessively, which will cause the viscosity of the electrolyte to increase and the additive itself to produce gas by side reactions, thereby deteriorating the performance of the battery.

The high-temperature cycle performance, high-temperature storage gas production performance, capacity retention rate, and DCR growth rate of the batteries in other examples of Examples 11 to 16 are significantly better than those in Example 16. This is because the addition amount of the third additive in Example 16 (5%) is higher than that in other Examples. The possible reason is that the third additive is used excessively, which will cause the selfdecomposition of the third additive and the generation of HF, thereby deteriorating the performance of the battery cell.

It can be seen from Table 5 that by adding a combination of the first additive and the second additive or a combination of the first additive, the second additive, and the third additive to different lithium-ion battery systems, the gas production of the battery can be reduced, the high-temperature cycle performance and high-temperature storage performance of the battery can be improved, and the impedance growth of the battery can be inhibited. The combination of the first additive, the second additive, and the third additive has a better effect, which is the same as the conclusion of the battery system using lithium iron phosphate material as the positive electrode active material. It is indicated that the electrolyte additive of the present disclosure can be applied to different lithium-ion battery systems.

The high-temperature storage performance and high-temperature cycle performance of the secondary batteries obtained in Examples 38 to 45 were characterized. The characterization results were shown in Table 6.

### 1. At 45°C, capacity retention test was performed on the battery after 300 cycles:

The capacity retention rate of the sodium ion batteries after 300 cycles at high temperature (45°C) and 1C charge and discharge conditions was tested. The sodium-ion batteries, for which clamping and capacity grading were completed, were placed in a preset temperature environment, charged at a constant current of 1C and a constant voltage to the upper cut-off voltage, with a cut-off current of 0.05C, and then discharged at a constant current of 1C/1C to the lower cut-off voltage. This cycle was repeated, and the discharge capacities of the first cycle and the last cycle of the battery were recorded. The capacity retention rate was calculated according to the following formula. Capacity retention rate = discharge capacity of the last cycle / discharge capacity of the first cycle × 100%.

### 2. High temperature storage performance test:

Swelling rate test: At 25°C, the battery was charged at a constant current of 1C and a constant voltage to the upper cut-off voltage, and the initial thickness of the sodium-ion battery at this time was measured. Then the battery was stored at 60°C for 30 days to test the thickness of the sodium-ion battery. The swelling rate of the battery was calculated according to the formula: Swelling rate (%) = (thickness after storage - initial thickness) / initial thickness × 100%.

Cycle performance test: Once clamping and capacity grading was completed, the clamping plate was removed from the sodium-ion battery, the sodium ion battery was placed in an environment of 25°C, and charged at a constant current of 1C and a constant voltage to the upper cut-off voltage, with a cut-off current of 0.05C. Then, the battery was discharged at a constant current of 1C to the lower cut-off voltage, and the discharge capacity at this time was recorded as C0. The battery cell was then charged again at a constant current of 1C and a constant voltage to the upper cut-off voltage, and the cut-off current was 0.05C. The fully charged battery was then placed in a constant temperature oven at 60°C for 30 days and then taken out. The battery was placed in an environment of 25°C for 2 hours and then discharged at a constant current of 1C in an environment of 25°C to the lower cut-off voltage. The discharge capacity at this time was recorded as C1. Capacity retention rate = (C1/C0) × 100%.

DCR growth rate test: DCR1 before storage and DCR2 after storage were tested. The DCR growth rate was calculated using the formula (DCR2-DCR1)/DCR1×100%.

**[Table 6]**

| | Capacity retention rate for 300 cycles at 45°C (%) | High-temperature storage at 60°C for 30 days | | |
|---|---|---|---|---|
| | | Capacity retention rate (%) | Swelling rate (%) | DCR growth rate (%) |
| Example 38 | 89.2 | 85.4 | 8.3 | 25.7 |
| Example 39 | 88.9 | 85.1 | 8.9 | 25.8 |
| Example 40 | 87.7 | 84.5 | 8.5 | 26.9 |
| Example 41 | 89.1 | 84.9 | 8.8 | 25.9 |
| Example 42 | 87.9 | 84.3 | 8.7 | 26.1 |
| Example 43 | 92.7 | 89.5 | 7.1 | 23.1 |
| Example 44 | 91.9 | 88.9 | 7.2 | 23.9 |
| Example 45 | 92.5 | 88.8 | 7.5 | 24.2 |

As can be seen from Table 6, in Examples 38 to 45 of the present disclosure, compared with adding merely the first additive and the second additive, the addition of the first additive, the second additive and the third additive can more significantly reduce the gas production of the battery, improve the high-temperature cycle performance and high-temperature storage performance of the battery, and inhibit the increase in battery impedance (DCR). It can be seen that the electrolyte additive according to the embodiment of the present disclosure is also applicable to the sodium ion batteries, improving the high-temperature cycle performance and high-temperature storage performance of the sodium ion batteries, and inhibiting the impedance (DCR) growth of the battery.

In the specification, the description of the reference terms such as "one embodiment", "some embodiments", "example", "specific example", or "some examples" means that the specific features, structures, materials, or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

## Claims

1. An electrolyte additive, comprising:
a first additive, wherein the first additive comprises a compound containing element silicon and an unsaturated hydrocarbyl group; and
a second additive, wherein the second additive comprises a compound represented by Formula 1: 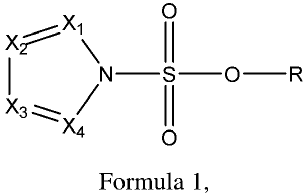 where:
X₁, X₂, X₃, and X₄ are each independently selected from N or CH;
R is selected from 5- to 6-membered aryl, 5- to 6-membered aryl substituted with R₀, 5-to 6-membered heteroaryl, 5- to 6-membered heteroaryl substituted with R₀, C₁₋₈ alkyl, C₁₋₈ alkyl substituted with R₀, C₂₋₈ alkenyl, C₂₋₈ alkenyl substituted with R₀, C₀₋₈ alkylsilyl, or C₀₋₈ alkylsilyl substituted with R₀; and
R₀ is selected from C₁₋₆ alkyl, C₁₋₆ alkoxy, or halogen.

2. The electrolyte additive according to claim 1, wherein a mass ratio of the first additive to the second additive is (1 to 50): (1 to 50).

3. The electrolyte additive according to claim 1 or 2, wherein the first additive comprises at least one of a compound represented by Formula 2 or a compound represented by Formula 3, 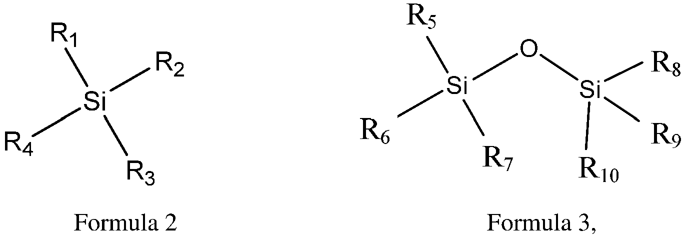 where:
R₁, R₂, R₃, R₄, R₅, R₆, R₇, R₈, R₉, and R₁₀ are each independently selected from one of H, C₁-C₅ alkyl, C₂-C₅ alkenyl, C₂-C₅ alkynyl, C₂-C₅ alkoxy, or C₂-C₅ alkenyloxy; and
at least one of R₁, R₂, R₃, R₄, R₅, R₆, R₇, R₈, R₉, or R₁₀ is an unsaturated hydrocarbyl group.

4. The electrolyte additive according to any one of claims 1 to 3, wherein the first additive comprises at least one of tetravinylsilane, tetramethyldivinyldisiloxane, vinyltrimethoxysilane, or allyloxytrimethylsilane.

5. The electrolyte additive according to any one of claims 1 to 4, wherein the second additive comprises at least one of the following compounds:

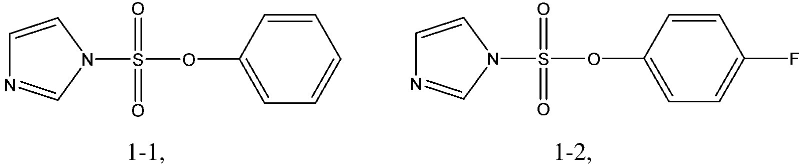

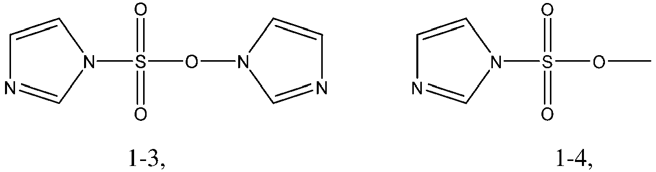

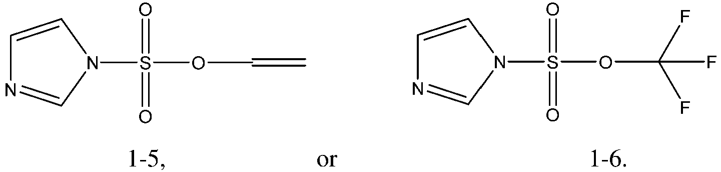

6. The electrolyte additive according to any one of claims 1 to 5, further comprising a third additive, wherein the third additive comprises fluoroethylene carbonate.

7. The electrolyte additive according to claim 6, wherein a mass ratio of the first additive, the second additive, and the third additive is (1 to 50): (1 to 50): (2 to 50).

8. An electrolyte, comprising the electrolyte additive according to any one of claims 1 to 7.

9. The electrolyte according to claim 8, wherein:
based on a total mass of the electrolyte, a mass proportion of the first additive ranges from 0.1% to 5%, and optionally from 0.1% to 3%; and/or
based on the total mass of the electrolyte, a mass proportion of the second additive ranges from 0.1% to 5%, and optionally from 0.1% to 3%; and/or
based on the total mass of the electrolyte, a mass proportion of the third additive ranges from 0.2% to 5%, and optionally from 0.5% to 2%.

10. A battery, comprising the electrolyte according to any one of claims 8 to 9.

11. The battery according to claim 10, comprising a positive electrode active material, wherein:
the positive electrode active material comprises at least one of LiCoO₂, LiMn₂O₄, LiMnO₂, Li₂MnO₄, LiFePO₄, Li₁₊ₐMn₁₋ₓMₓO₂, LiCo₁₋ₓMₓO₂, LiFe₁₋ₓMₓPO₄, or Li₂Mn₁₋ₓO₄, where M comprises at least one of Ni, Co, Mn, Al, Cr, Mg, Zr, Mo, V, Ti, B, or F, where 0≤a<0.2, and 0≤x<1; or
the positive electrode active material comprises at least one of Na_{X1}M1O₂, Naₓ₂M2[M3(CN)₆], NaFePO₄, Na₃V₂(PO₄)₃, Na₂M4P₂O₇, Na₂Fe₂(SO₄)₃, or Na₂M4(SO₄)₂·2H₂O, where:
0<x1≤1, M1 comprises at least one of Ni, Co, Mn, Fe, or Cu;
0<x2<6, M2 comprises at least one of Ni, Fe, or Mn, and M3 comprises at least one of Fe or Mn; and
M4 comprises at least one of Fe, Co, Mn, or Cu.
